# EUROPÄISCHE PATENTSCHRIFT

(11) **EP 2 632 680 B1**
(45) Veröffentlichungstag und Bekanntmachung des Hinweises auf die Patenterteilung: **25.09.2019**
(21) Anmeldenummer: 11804628.3
(22) Anmeldetag: 27.10.2011
(51) Int. Cl.: B29C 45/16, B29D 23/20, B29L 23/20, B29C 45/00

(54) **VERFAHREN ZUR HERSTELLUNG EINES ZWEIKOMPONENTEN TUBENROHLINGS, SPRITZGIESSWERKZEUG DAZU UND DAMIT HERGESTELLTER TUBENROHLING**
METHOD FOR PRODUCING A TWO-COMPONENT TUBE BLANK, INJECTION MOULD THEREFOR AND TUBE BLANK PRODUCED THEREBY
PROCÉDÉ DE FABRICATION D'UNE ÉBAUCHE DE TUBE À DEUX COMPOSANTS, OUTIL DE COULÉE PAR INJECTION DESTINÉ À CE PROCÉDÉ ET ÉBAUCHE DE TUBE

(30) Priorität: 27.10.2010 CH 17832010
(43) Veröffentlichungstag der Anmeldung: 04.09.2013
(73) Patentinhaber: Otto Hofstetter AG, 8730 Uznach (CH)
(72) Erfinder: HOFSTETTER, Otto, CH-8730 Uznach (CH)
(74) Vertreter: Alder, Hans Rudi
(86) Internationale Anmeldenummer: PCT/CH2011/000262
(87) Internationale Veröffentlichungsnummer: WO 2012/055059

(56) Entgegenhaltungen:
- EP-A1- 0 073 356
- WO-A1-03/099544
- WO-A1-2012/030209
- DE-U1-202010 008 758
- US-A1- 2004 124 558

## Beschreibung

Die vorliegende Erfindung betrifft ein Verfahren zur Herstellung eines Zweikomponenten-Tubenrohlings, sowie ein dazu besonders geeignetes Spritzgiesswerkzeug und einen damit hergestellten Tubenrohling.

Verfahren und Spritzgiesswerkzeuge zur Herstellung von Tubenrohlingen sind allgemein bekannt, bspw. aus der FR-2'731'983. Diese Tubenrohlinge sind einstückig ausgebildet, d.h. aus einem einzigen weichen Kunststoffmaterial geformt. Es hat sich jedoch gezeigt, dass derartige Tuben nicht langzeitig sicher verschliessen und das Füllgut rasch austrocknet, insbesondere weil der Verschlusszapfen und der Ausguss wegen deren Weichheit nicht so schliessen, dass Rückstände beim Schliessen wieder weggeschoben werden und ein luftdichter Verschluss mit dieser Art Tuben nicht gewährleistet werden kann.

Es sind heute deshalb Zweikomponenten-Tuben bekannt, welche einen weichen Tubenkörper aufweisen, auf den ein Deckelteil aus einem harten Kunststoffmaterial aufgesetzt ist. Dieser Tubenaufbau hat sich bewährt und erlaubt einen luftdichten Verschluss. Ein Verfahren zur einfachen Herstellung dazu geeigneter Tubenkörper ist aus der EP-2'184'155 bekannt. Bei diesem Spritzgiesswerkzeug liegt die Anspritzöffnung unterhalb des Tubenauslasses und wird die Kunststoffschmelze über eine symmetrisch angeordnete Anspritzspinne in den Tubenkörper gespritzt. Dabei bildet sich ein Angusszapfen der zentral im Innern des Tubenauslasses steht. Je nach Ausgestaltung der Tubenschulter kann ein Deckelteil aus einem harten Material aufgeclipst oder aufgeschraubt werden. Es versteht sich, dass die Herstellung dieser Tubenrohlingen aus mehreren unabhängig hergestellten Tubenteilen und wegen der zusätzlichen Montageschritte aufwändig und unbefriedigend zeitintensiv ist.

Aus der WO 03/099544 ist deshalb ein Verfahren zur Herstellung eines Zweikomponenten-Tubenrohlings und ein Werkzeug für dieses Verfahren beschrieben worden, bei welchem der Tubenkörper und dessen Deckelteil in einem Spritzgiesswerkzeug gleichzeitig hergestellt werden. Dabei wird eine erste Materialkomponente über eine erste Düse und zwei symmetrisch zur Tubenkörperachse angeordnete Angussstellen in eine Kavität für den Tubenkörper und dessen Tubenschulter gespritzt. Eine zweite Materialkomponente wird über eine zweite Düse und eine dritte Angussstelle in eine Kavität für das Deckelteil gespritzt. Dabei umfliesst die zweite Materialkomponente für das Deckelteil ein Zylinderstück für die Auslassöffnung des Tubenrohlings. Leider erweist es sich, dass mit diesem Verfahren, resp. mit diesem Werkzeug die einzelnen Kunststoffkomponenten nicht mit unterschiedlichen Temperaturen gespritzt werden können, was für deren einwandfreie Förderung und Formbildung hinderlich ist. Darüber hinaus lässt sich mit dem vorgeschlagenen Aufbau des Zweikomponenten-Tubenrohlings kein langzeitig stabiler Tubenverschluss bilden, insbesondere weil einerseits der harte Verschlusszapfen im Innern des Deckelteils beim Schliessen mit dem weichen Material des Zylinderstücks für die Auslassöffnung des Tubenkörpers zusammenwirkt, d.h. keine sauber bleibende Abdichtung bilden kann und andererseits sich wegen der unkontrollierten Temperaturführung bei den fliessenden Materialkomponente keine langfristig stabile (chemische) Schmelzverbindung zwischen der harten Materialkomponente und der weichen Materialkomponente, insbesondere im druckbelasteten Verbindungsbereich zwischen Tubenkörper und Deckelteil, ausbildet.

Darüber hinaus erweist es sich, dass diese Herstellungsweise nicht nur zu keiner genügend beständigen Haftverbindung zwischen der weichen und der harten Materialkomponente führt, sondern dass auch die Herstellung der Tubenrohlinge zeitintensiv ist, d.h. unerwünscht lange Zykluszeiten benötigt.

Es ist deshalb Aufgabe der vorliegenden Erfindung einen Zweikomponenten-Tubenrohling, ein geeignetes Spritzgiesswerkzeug und ein Verfahren zur Herstellung eines derartigen Tubenrohlings zu schaffen, welche die Nachteile der herkömmlichen Tubenrohlinge, Werkzeuge und Herstellungsverfahren nicht mehr aufweisen. Insbesondere soll ein Spritzgiesswerkzeug für ein Herstellungsverfahren mit kurzen Zykluszeiten geschaffen werden, mit welchem insbesondere langfristig stabile und dicht abschliessende Tubenrohlingen hergestellt werden können.

Diese Aufgabe wird einerseits mit einem Verfahren gemäss Anspruch 1 gelöst und insbesondere mit einem Verfahren zur Herstellung eines Zweikomponenten-Tubenrohlings mit Hilfe eines Mehrfach-Spritzgiess-Werkzeugs, welches eine erste Station, eine zweite Station und eine Mittelstation aufweist, wobei in einem ersten Schritt die erste Station an die in einer Bereitschaftsposition vorliegende Mittelstation mit dem erforderlichen Anpressdruck angelegt wird und aus einer ersten (weichen) Materialkomponente (bspw. Polyethylen) bei einer ersten Temperatur ein Tubenkörper mit einer oberhalb des Tubenkörpers angeordneten Angussspinne spritzgegossen wird. In einem nachfolgenden zweiten Schritt wird die erste Station von der Mittelstation getrennt und um 180° um eine zur Ausrichtung der Tubenkörper senkrecht stehende Drehachse gedreht. In einem dritten Schritt, d.h. nach dem Drehen der Mittelstation wird die zweite Station mit dem erforderlichen Anpressdruck an die Mittelstation angelegt, um eine Formkavität für das form- und stoffschlüssige Anspritzen des Deckelteils an die Anspritzspinne und den Tubenkörper zu bilden und wird aus einer zweiten (harten) Materialkomponente (bspw. Polypropylen) bei einer zweiten Temperatur ein Deckelteil an die Angussspinne und den Tubenkörper angespritzt. Dies erfolgt derart, dass die zweite und unterschiedlich temperierte Materialkomponente in unmittelbarer Nähe des Stossbereichs (Verbindungszone) zwischen Deckelteil und Tubenkörper eingespritzt wird, um eine langfristig stabile, form- und stoffschlüssige Verbindung einzugehen, wobei sich wegen der Temperaturkontrolle die zweite Materialkomponente stoffschlüssig mit der noch nicht vollständig ausgehärteten, d.h. mindestens teilweise noch unvernetzten ersten Materialkomponente verbindet. Die Verbindungszone zwischen dem Tubenkörper und dem Deckelteil wird in Form einer Nut-Feder-Verbindung ausgebildet, um die Kontaktfläche und damit die mechanische (formschlüssige) und chemische (stoffschlüssige) Verbindung zwischen Tubenkörper und Deckelteil zu maximieren. In einem vierten Schritt wird die zweite Station von der Mittelstation getrennt und werden in einem fünften Schritt die Tubenrohlinge aus der Mittelstation entnommen bevor die Mittelstation wieder in die Bereitschaftsposition gedreht wird und der erste Schritt wieder ausgeführt wird.

Die Konstruktion des erfindungsgemässen Spritzgiesswerkzeugs erlaubt es den ersten Verfahrensschritt (Spritzgiessen des Tubenkörpers mit Angussspinne aus einer ersten Materialkomponente bei einer ersten Temperatur) und den dritten Verfahrensschritt (Spritzgiessen des Deckelteils aus einer zweiten Materialkomponente bei einer zweiten Temperatur) zur Herstellung eines Zweikomponenten-Tubenrohlings gleichzeitig erfolgen zu lassen. Damit kann die Zykluszeiten erheblich reduziert werden. Darüber hinaus kann das vorliegende Spritzgiess-Werkzeug in einfacher Weise auch als Mehrfach-Spritzgiess-Werkzeug aufgebaut werden, um vier oder mehr Tubenrohlinge gleichzeitig herstellen zu können.

Die gestellte Aufgabe wird insbesondere durch ein Spritzgiess-Werkzeug gemäss Anspruch 4 gelöst und insbesondere durch ein Spritzgiess-Werkzeug, welches drei Hauptstationen umfasst. Eine erste Station für das Spritzgiessen eines Tubenkörpers mit einer oberhalb des Tubenkörpers angeordneten Angussspinne fördert die erste Materialkomponente bei einer ersten Temperatur, welche für die Verarbeitung dieser Materialkomponente erforderlich ist. Eine zweite Station für das Anspritzen eines Deckelteils fördert die zweite Materialkomponente bei einer zweiten Temperatur. Dieses Spritzgiesswerkzeug umfasst darüber hinaus eine zwischen diesen beiden Stationen drehbar angeordnete Mittelstation, welche mit der ersten Station eine Formkavität für das Spritzgiessen des Tubenkörpers mit einer oberhalb des Tubenkörpers angeordneten Angussspinne bildet. Nach erfolgtem Spritzgiessen wird die erste Station von der Mittelstation getrennt und wird die Mittelstation um eine zur Ausrichtung der Tubenkörper senkrecht stehende Drehachse um 180° gedreht. Nach dem Drehen der Mittelstation wird die zweite Station mit dem erforderlichen Anpressdruck an die Mittelstation angelegt, um eine Formkavität für das form- und stoffschlüssige Anspritzen des Deckelteils über die Anspritzspinne und den Tubenkörper zu bilden. Die Verbindungsstelle zwischen dem Tubenkörper und dem Deckelteil wird in Form einer Nut-Feder-Verbindung ausgebildet, um die Kontaktfläche und damit die mechanische (formschlüssige) und chemische (stoffschlüssige) Verbindung zwischen Tubenkörper und Deckelteil zu maximieren. Die Formkavitäten für den Tubenkörper und das Deckelteil sind im Bereich einer Verbindungszone derart geformt sind, dass sich beim Spritzgiessen zwischen der ersten Komponente A und der zweiten Komponente B eine Feder-Nut-Verbindung bildet. In einer bevorzugten Ausführungsform ist die drehbare Mittelstation in Form eines Plattenwerkzeugs aufgebaut und weist für das gleichzeitige Spritzgiessen auf gegenüberliegenden Seiten mehrere über und untereinander angeordnete Formkavitäten auf.

Die vorliegende Aufgabe wird schliesslich durch einen Tubenrohling gemäss Anspruch 6 gelöst und insbesondere durch einen Tubenrohling, welcher einen Tubenkörper und eine oberhalb des Tubenkörpers angeordnete Angussspinne aus einer ersten Materialkomponente und ein mit diesen form- und stoffschlüssig verbundenes Deckelteil aus einer zweiten Materialkomponente aufweist. Die Verbindungszone zwischen dem Tubenkörper und dem Deckelteil ist in Form einer Nut-Feder-Verbindung ausgebildet, um die Kontaktfläche und damit die mechanische (formschlüssige) und chemische (stoffschlüssige) Verbindung zwischen Tubenkörper und Deckelteil zu maximieren.

Das erfindungsgemässe Verfahren und das dazugehörige Spritzgiesswerkzeug erweisen sich als überraschend einfach. Insbesondere lassen sich damit Zweikomponenten-Tubenrohlinge mit einer langfristig stabilen Haftverbindung und einem luftdicht schliessenden Deckelteil in einem Werkzeug rasch und unkompliziert herstellen.

Bevorzugte Ausführungsformen weisen die Merkmale der Unteransprüche auf. Es versteht sich, dass das Spritzgiesswerkzeug als Mehrfachwerkzeug auch für die gleichzeitige Herstellung von mehreren Mehrkomponenten-Tubenrohlingen vorgesehen sein kann. Insbesondere können die unterschiedlichen Materialkomponenten unterschiedlich eingefärbt oder mit unterschiedlichen Füllstoffen versehen sein. Es liegt im Bereich des fachmännischen Könnens, die Kavitäten für die Tubenkörper vor dem Spritzgiessen mit IML-Folien auszulegen um die Tubenkörper gleichzeitig mit einer Beschriftung zu versehen.

Im Folgenden soll die vorliegende Erfindung anhand eines Ausführungsbeispiels und mit Hilfe der Figuren näher erläutert werden. Dabei zeigt:
- Fig. 1:: eine schematische Schnittdarstellung durch ein Spritzgiesswerkzeug bekannter Art;
- Fig. 2:: eine schematische Schnittdarstellung durch eine Tubenschulter mit aufschnappbarem Deckelteil bekannter Art;
- Fig.3:: eine schematische Schnittdarstellung durch eine Tubenschulter mit aufschraubbarem Deckelteil bekannter Art;
- Fig. 4:: eine räumliche Darstellung eines Tubenrohlings mit angeformtem Deckelteil;
- Fig. 5:: eine schematische Schnittzeichnung durch ein erfindungsgemässes Formwerkzeug;
- Fig. 6:: eine schematische Seitenansicht eines erfindungsgemässen Formwerkzeugs;
- Fig.7:: eine schematische räumliche Ansicht einer zweiten Station des erfindungsgemässen Formwerkzeugs;
- Fig. 8:: eine schematische räumliche Ansicht einer Mittelstation des erfindungsgemässen Formwerkzeugs;
- Fig. 9:: eine schematische räumliche Ansicht einer ersten Station des erfindungsgemässen Formwerkzeugs;
- Fig. 10:: eine räumliche Darstellung eines erfindungsgemäss hergestellten Tubenrohlings ohne Deckelteil;
- Fig. 11:: eine schematische Schnittzeichnung durch die erfindungsgemässe Verbindungszone im Schulterbereich eines erfindungsgemässen Tubenrohlings;
- Fig. 12:: eine schematische Schnittzeichnung durch die periphere Verbindungszone im Schulterbereich eines erfindungsgemäss hergestellten Tubenrohlings.

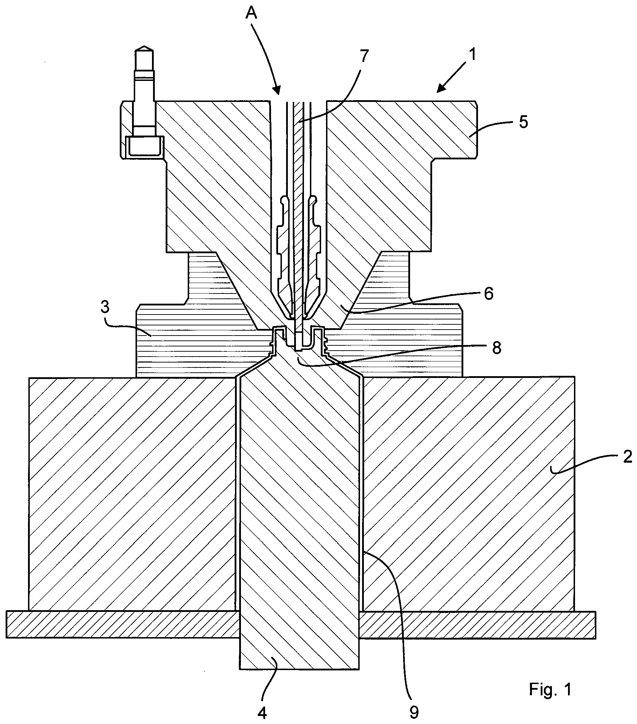

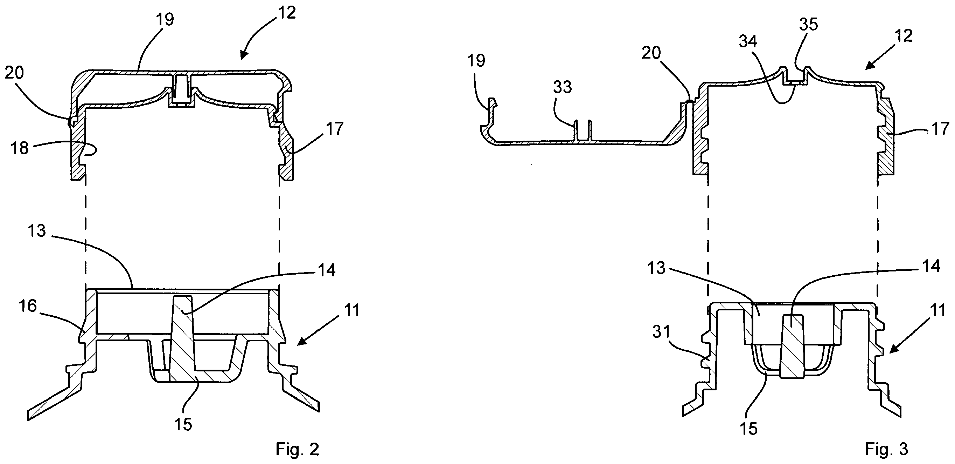

Fig. 1 zeigt eine schematische Schnittdarstellung durch ein Spritzgiesswerkzeug wie es beispielsweise aus der EP-2'184'155 bekannt ist. Dieses Werkzeug, hier auch Formwerkzeug 1 genannt, umfasst eine Formplatte 2, in welcher ein Formkern 4 fest montiert ist und welche gemeinsam eine Kavität 9 für den herzustellenden Tubenkörper bilden. Die Kunststoffschmelze A wird über eine Düse 5 in diese Kavität 9 eingebracht, wobei ein Düsenstock 7 die Zufuhr der Schmelze A durch die Anspritzöffnung 8 der Düsenspitze 6 steuert. Eine Schieberplatte, hier auch Schieber 3 genannt, dient der sicheren Entnahme des frisch spritzgegossenen Tubenkörpers 38. Bei diesem Formwerkzeug 1 liegt die Anspritzöffnung 8 unterhalb des Tubenauslasses 13 (Fig. 3) und wird die Kunststoffschmelze A über eine symmetrisch angeordnete Anspritzspinne 15 (Fig. 2, 3) in die Kavität 9 für den Tubenkörper geführt. Dabei bildet sich ein Angusszapfen 14 (Fig. 2, 3) der zentral im Innern des Tubenauslasses 13 steht, wie dies aus Fig. 2 und Fig. 3 ersichtlich ist.

Fig. 2 zeigt eine Tubenschulter 11 eines in dieser Weise hergestellten Tubenrohlings. Der Tubenauslass 13 weist bei dieser Ausgestaltung aussenseitig eine ringförmige Rastnase 16 auf, über welche ein separat gespritztes Deckelteil 12 mit komplementär geformter Rastrille 18 aufgeschnappt / aufgeclipst werden kann. Dieses Deckelteil 12 ist einstückig, d.h. aus einem Stück gespritzt, und weist ein Basiselement 17 auf, an welchem ein Verschlusselement 19 mittels eines Scharnierelements 20 beweglich verbunden ist. Dieses Deckelteil 12 ist in der Regel aus einem härteren Material, meist PP, hergestellt, insbesondere um einen luftdichten Verschluss zwischen Verschlusszapfen 33 und Zapfenloch 35 gewährleisten zu können.

Fig. 3 zeigt eine Tubenschulter 11, deren Tubenauslass 13 aussenseitig mit einem Gewinde 31 versehen ist, welches sich mit einem im Innern eines separat gespritzten Deckelteils 12 vorgesehenen Gegengewinde 17 verschrauben lässt. Das Deckelteil 12 weist ein Basiselement 17 mit einem becherförmigen Zapfenloch für die Auslassöffnung 34 und ein Verschlusselement 19 mit einem Verschlusszapfen 33 auf, welche über ein Scharnierelement 20 miteinander verbunden sind. Bei der vorliegenden Ausführungsform ist das gesamte Deckelteil 12 einstückig ausgebildet. Bei diesen Ausführungsformen wird deutlich, dass der Tubenauslass 13 nicht für Deckelteile 12 mit sehr kleinen Auslassöffnungen 34 geeignet ist, da der zentral angeordnete Angusszapfen 14 das Ausfliessen des Füllgutes stark behindert.

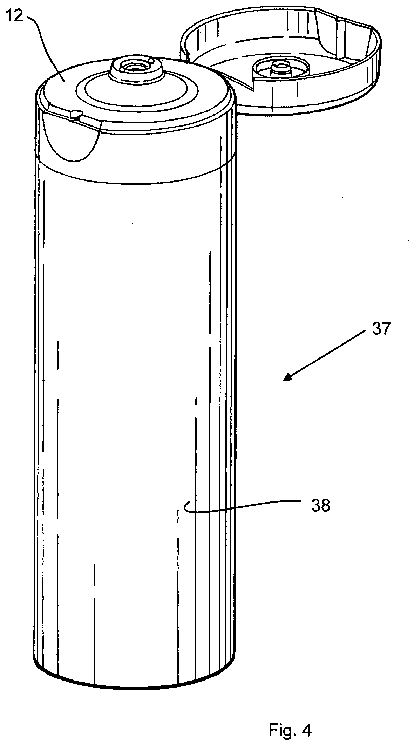

Fig. 4 zeigt einen Tubenrohling 37 bekannter Art, bei welchem das Deckelteil 12 direkt an den Tubenkörper 38 resp. an eine über den Tubenkörper herausragende Angussspinne angespritzt ist. Dies wird mit einem Werkzeug erreicht, wie es bspw. in der oben genannten WO03/099544 beschrieben ist. Leider erweist sich dieses Werkzeug nicht als besonders geeignet für die Herstellung von Tubenrohlingen 38 mit unterschiedlichem Kunststoffmaterial, weil diese Materialien bei unterschiedlichen Temperaturen gefördert und gespritzt werden müssen. Die mit einem derartigen Werkzeug hergestellten Tubenrohlinge 37 weisen deshalb eine schlechte Haftverbindung zwischen dem weichen Tubenkörper 38 und dem harten Deckelteil 12.

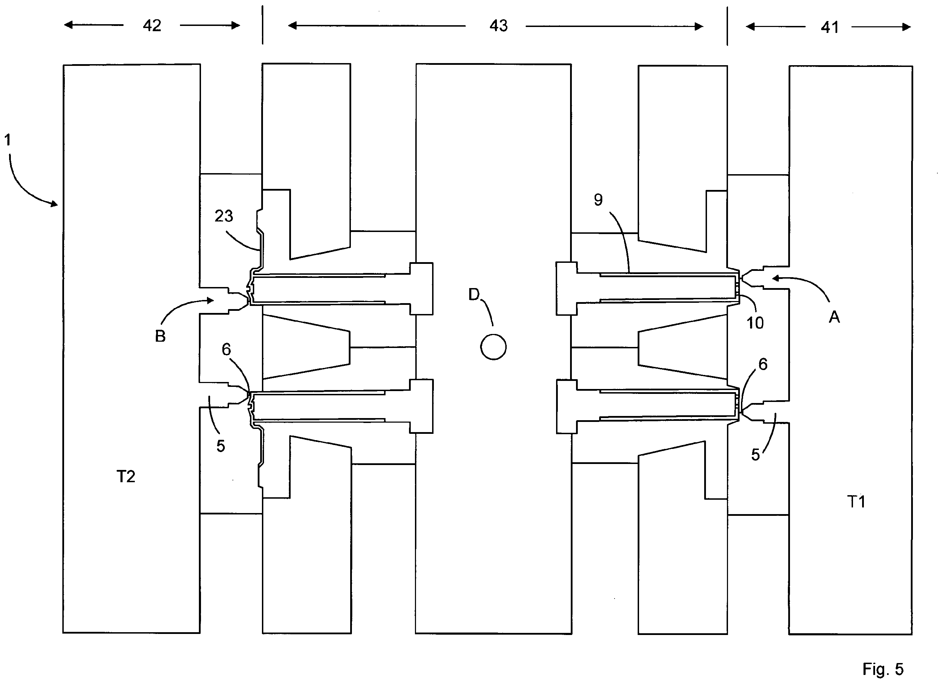

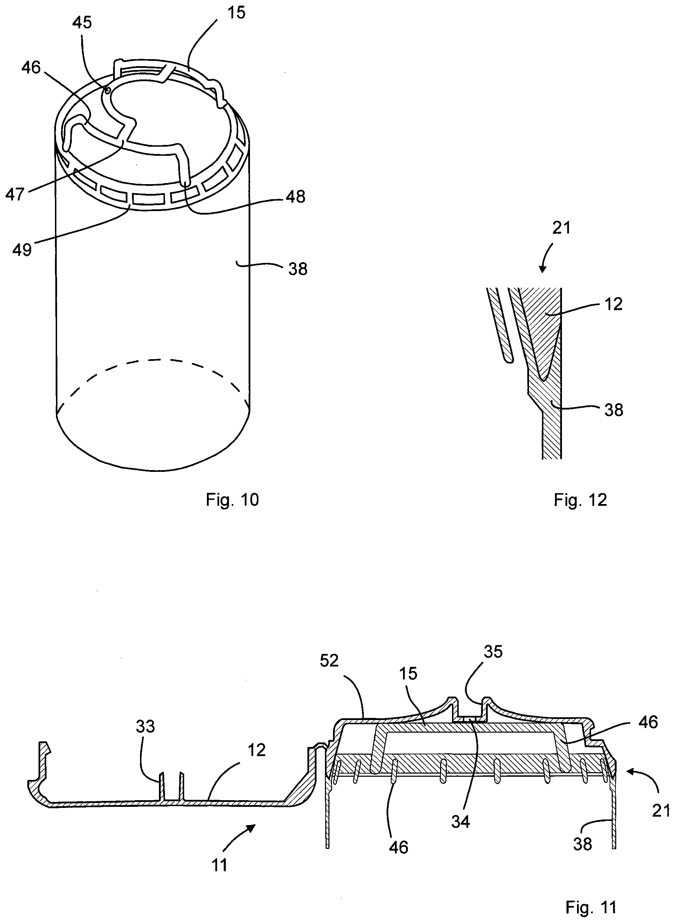

Fig. 5 zeigt ein erfindungsgemässes Spritzwerkzeug 1, welches eine erste Station 41 aufweist, welche mit einer Mittelstation (Dreheinheit) 43 zusammenarbeitet. Diese Mittelstation 43 umfasst eine Kavität 9 für den Tubenkörper 38 und bildet zusammen mit der ersten Station 41 ein Mehrplattenwerkzeug, wie es der Fachmann hinlänglich kennt. Die Düsenspitze 6 der in der ersten Station 41 montierten Düse 5 liegt erfindungsgemäss asymmetrisch zur Symmetrieachse der Tubenkörperkavität 9. Beim Spritzgiessen bildet sich also eine oberhalb des Tubenkörpers 38 liegende asymmetrische Angussspinne 15, weil deren Angussstelle 45 nicht zentral angeordnet ist, d.h. zur Symmetrieachse des Tubenkörpers 38 versetzt angeordnet ist. Eine bevorzugte Ausgestaltung dieser Angussspinne 15 mit Tubenkörper 38 lässt sich der Fig. 10 entnehmen. Darüberhinaus umfasst das vorliegende Spritzgiesswerkzeug 1 eine zweite Station 42, welche mit der Mittelstation 43 eine Formkavität 23 für das Deckelteil 12 bildet und mit welcher sich an die bereits gespritzte Angussspinne 15 ein Deckelteil 12 anspritzen lässt. Dabei ist die Düsenspitze 6 der Düse 5 wiederum asymmetrisch zur Symmetrieachse des Tubenkörpers 38 angeordnet. Die Mittelstation 43 lässt sich erfindungsgemäss zwischen diesen beiden Positionen drehen. Diese Anordnung erlaubt es Tubenrohlinge 37 aus unterschiedlichen Materialien und mit unterschiedlichen Temperaturen T₁, T₂ in einem Mehrfach-Spritzgiess-Werkzeug 1 herzustellen.

Das erfindungsgemässe Verfahren zur Herstellung eines Zweikomponenten-Tubenrohlings 37 sieht vor, dass in einem ersten Schritt die erste Station 41 an die in einer Bereitschaftsposition vorliegende Mittelstation 43 mit dem erforderlichen Anpressdruck angelegt wird, um dann die erste (weiche) Materialkomponente A bei einer ersten Temperatur T₁, welche für die Verarbeitung dieser Materialkomponente A erforderlich ist, in die Kavität 9 einzubringen und einen Tubenkörper 38 mit einer oberhalb des Tubenkörpers 38 angeordneten Angussspinne 15 zu spritzen. In einem zweiten Schritt wird die erste Station 41 von der Mittelstation 43 getrennt und wird die drehbare Mittelstation 43 um 180° um eine zur Ausrichtung der Tubenkörper 38 senkrecht stehende Drehachse D gedreht. In einem dritten Schritt wird die zweite Station 42 an der Mittelstation 43 mit dem erforderlichen Anpressdruck angelegt, um eine Formkavität 23 für das form- und stoffschlüssige Anspritzen des Deckelteils über die Anspritzspinne und den Tubenkörper zu bilden und wird aus einer zweiten (harten) Materialkomponente B bei einer zweiten Temperatur T₂ ein Deckelteil 12 an diese Angussspinne 15 und den Tubenkörper 38 angespritzt. Dabei gehen die beiden Materialkomponenten A, B eine form- und stoffschlüssige Verbindung ein. Gemäß der Erfindung ist die Verbindungsstelle zwischen dem Tubenkörper und dem Deckelteil in Form einer Nut-Feder-Verbindung ausgebildet, um die Kontaktfläche und damit die mechanische (formschlüssige) und chemische (stoffschlüssige) Verbindung zwischen Tubenkörper und Deckelteil zu maximieren. In einem vierten Schritt wird die zweite Station 42 von der Mittelstation 43 wieder getrennt wird. In einem fünften Schritt werden die Tubenrohlinge 37 aus der Mittelstation 43 entnommen und wird die Mittelstation 37 wieder in die Bereitschaftsposition gedreht wird, um den ersten Schritt wieder ausführen zu können. Es versteht sich, dass der erste Schritt und der dritte Schritt gleichzeitig ausgeführt werden, um den Schliessdruck der ersten Station auf die Mittelstation und denjenigen der zweiten Station auf die Mittelstation symmetrisch verteilen zu können.

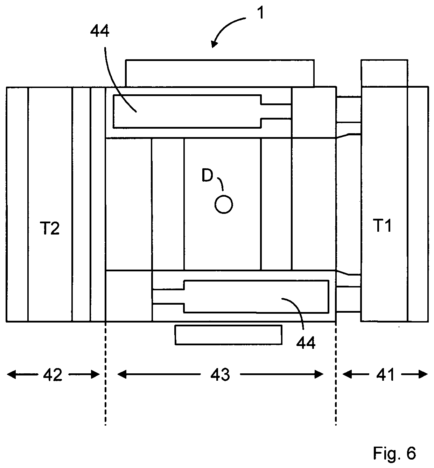

Fig. 6 zeigt eine Seitenansicht des geschlossenen Spritzgiesswerkzeugs 1 mit seiner ersten Station 41, seiner drehbaren Mittelstation 43 und seiner zweiten Station 42, sowie diverse Aggregate 44 für die Zufuhr der Schmelze, für die Regulierung der Temperatur und die Steuerung der mechanischen Bewegungen.

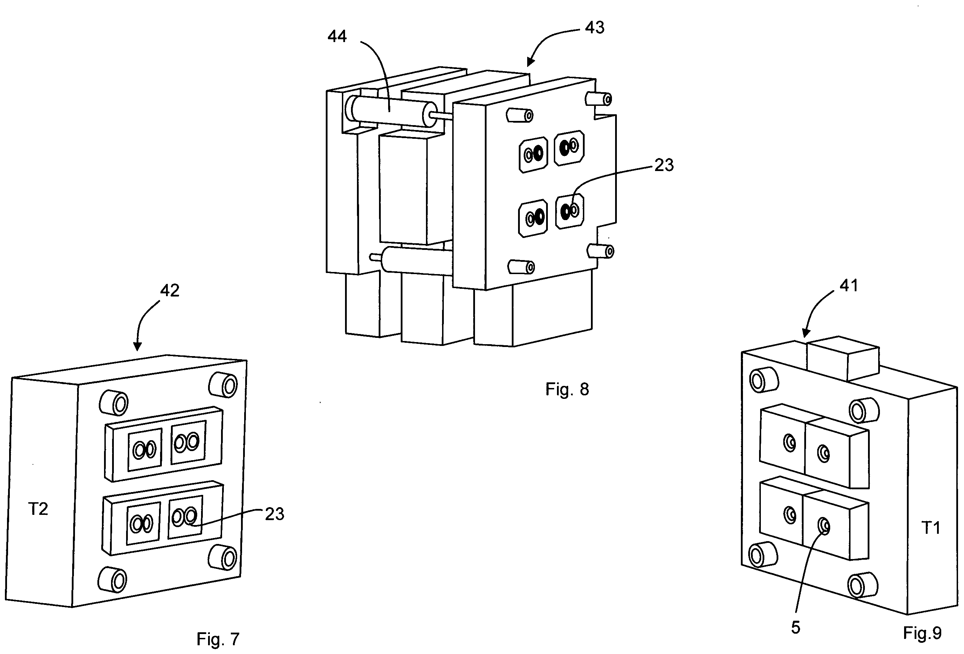

Fig. 7, Fig. 8 und Fig. 9 zeigen die Hauptkomponenten des erfindungsgemässen Spritzgiesswerkzeugs 1 als Vierfach-Werkzeug in räumlich getrennter Weise. Fig. 9 zeigt die erste Station 41 mit vier Düsen 5, über welche im ersten Verfahrensschritt die Kavitäten 9 für die Tubenkörper 38 mit Anspritzspinne 15 gefüllt werden. Die gezeigte Seite dieser Station 41 ist die der Mittelstation 43 zugewandte Seite. Fig. 7 zeigt die zweite Station 42 mit vier Düsen 5, mit welchen die Deckelteile 12 angespritzt werden. Fig. 8 zeigt die Mittelstation 43, welche für den zweiten und fünften Verfahrensschritt um 180° gedreht wird, um zusammen mit der ersten 41 und/oder zweiten Station 42 die gewünschte Kavität zu bilden. Diese Figuren machen deutlich, dass die Schmelze für die unterschiedlichen Kunststoffe A, B in einfacher Weise bei unterschiedlichen Temperaturen T₁, T₂ geführt werden können.

Der in Fig. 10 dargestellte Tubenkörper 38 mit asymmetrischer Angussspinne 15 und ohne Deckelteil 12 machen den ersten Herstellungsschritt deutlich. Dieser Tubenkörper 38 ist aus einem weichen Kunststoff A gefertigt und umfasst eine sich kaskadenartig verzweigende Angusspinne 15. Insbesondere läuft das eingespritzte Material A von der Angussstelle 45 nach zwei Seiten gegen die Peripherie des Tubenkörpers 38, teilt sich je ein erstes Mal an einer ersten Teilungsstelle 47 in je zwei Angussarme 46 und verzweigt sich dann ein zweites Mal an einer zweiten Teilungsstelle 48 in je vier Angussarme 46. Es versteht sich, dass der Transportweg für die Materialkomponente A von der Angussstelle 45 bis zur Einfüllstelle 49 immer gleich lang ist.

Fig. 11 zeigt den Schulterbereich 11 des fertig gespritzten Zweikomponenten-Tubenrohlings 37 mit dem Tubenkörper 38 und seiner Angussspinne 15 sowie das damit form- und stoffschlüssig verbundene Deckelteil 12. Durch die asymmetrische Ausgestaltung der Angussspinne 15 lassen sich beliebig weit oder eng geformte Auslassöffnungen 34 herstellen, ohne den Ausfluss des Füllgutes zu beeinträchtigen oder zu behindern.

Fig. 12 zeigt eine bevorzugte Ausführungsform für die periphere Verbindungszone zwischen dem Tubenkörper 38 und dem Deckelteil 12. Gemäß der Erfindung ist diese Verbindungszone in Form einer Feder-Nut-Verbindung gestaltet. Derartig hergestellte Tuben erweisen sich auch nach längerem Gebrauch und/oder unter aussergewöhnlichen Belastungen als besonders haftungssicher und druckdicht.

Die Vorteile des erfindungsgemässen Werkzeugs und des damit hergestellten Tubenrohlings sind dem Fachmann unmittelbar ersichtlich und insbesondere in der kontrollierbaren Temperaturführung der unterschiedlichen Schmelzen und der langfristig stabilen Verbindung von Tubenkörper und Deckelteil zu sehen. Die asymmetrische Anordnung der Angussstelle erlaubt die Herstellung von Tubenrohlingen für Füllgut aller Art und mit unterschiedlicher Viskosität. Es versteht sich, dass die Tubenrohlinge auch einen anderen Querschnitt aufweisen können, bspw. oval oder eckig.

Hilfsweise wird hier noch eine Referenzzeichenliste aufgeführt.

### Referenzzeichen:

- A: Zufuhr für Komponente A
- B: Zufuhr für Komponente B
- 1: Formwerkzeug
- 2: Formplatte
- 3: Schieber
- 4: Kern
- 5: Düse
- 6: Düsenspitze
- 7: Düsenstock
- 8: Anspritzöffnung
- 9: Tubenkörperkavität
- 10: Kavität für die Angussspinne
- 11: Tubenschulter
- 12: Deckelteil
- 13: Tubenauslass
- 14: Angusszapfen
- 15: Angussspinne
- 16: Rastnase
- 17: Basiselement
- 18: Rastrille
- 19: Verschlusselement
- 20: Scharnierelement
- 21: Verbindungszone
- 31: Gewinde
- 32: Gegengewinde
- 33: Verschlusszapfen
- 34: Auslassöffnung
- 35: Zapfenloch
- 37: Tubenrohling
- 38: Tubenkörper
- 41: erste Station
- 42: zweite Station
- 43: Mittelstation
- 44: Aggregate
- 45: Angussstelle für A-Komponente
- 46: Angussarm
- 47: erste Teilungsstelle
- 48: zweite Teilungsstelle
- 49: Einfüllstelle
- 52: Angussstelle für B-Komponente

## Patentansprüche

1. Verfahren zur Herstellung eines Zweikomponenten-Tubenrohlings (37) mit Hilfe eines Mehrfach-Spritzgiess-Werkzeugs mit einer ersten Station (41), einer zweiten Station (42) und einer Mittelstation (43), wobei in einem ersten Schritt die erste Station (41) an die in einer Bereitschaftsposition vorliegende Mittelstation (43) angelegt wird und aus einer ersten weichen Materialkomponente bei einer ersten Temperatur T₁ ein Tubenkörper (38) mit einer oberhalb des Tubenkörpers (38) angeordneten asymmetrische Angussspinne (15) spritzgegossen wird, wobei in einem zweiten Schritt die erste Station (41) von der Mittelstation (43) getrennt wird und die Mittelstation (43) um 180° um eine zur Ausrichtung der Tubenkörper (38) senkrecht stehende Drehachse gedreht wird und in einem dritten Schritt die zweite Station (42) an der Mittelstation (43) angelegt wird und aus einer zweiten harten Materialkomponente bei einer zweiten Temperatur T₂ ein Deckelteil (12) an diese asymmetrische Angussspinne (15) und den Tubenkörper (38) angespritzt wird, derart dass die beiden Materialkomponenten in einer peripheren Verbindungszone (21) in Form einer Feder-Nut-Verbindung eine form- und stoffschlüssige Verbindung eingehen und in einem vierten Schritt die zweite Station (42) von der Mittelstation (43) getrennt wird und in einem fünften Schritt die Tubenrohlinge (37) aus der Mittelstation (43) entnommen werden bevor die Mittelstation (37) wieder in die Bereitschaftsposition gedreht wird und der erste Schritt wieder ausgeführt wird.

2. Verfahren zur Herstellung eines Zweikomponenten-Tubenrohlings (37) nach Anspruch 1, **dadurch gekennzeichnet, dass** der erste und dritte Schritt gleichzeitig erfolgen.

3. Verfahren zur Herstellung eines Zweikomponenten-Tubenrohlings (37) nach Anspruch 2, **dadurch gekennzeichnet, dass** vier oder mehr Tubenrohlinge (37) gleichzeitig hergestellt werden.

4. Spritzgiess-Werkzeug für ein Verfahren gemäss Anspruch 1, welches drei Hauptstationen umfasst, nämlich eine erste Station (41) für das Spritzgiessen eines Tubenkörpers (38) mit einer oberhalb des Tubenkörpers (38) angeordneten Angussspinne (15) bei einer ersten Temperatur T₁, eine zweite Station (42) für das Anspritzen eines Deckelteils (12) bei einer zweiten Temperatur T₂, sowie eine zwischen diesen beiden Stationen (41, 42) drehbar angeordnete Mittelstation (43), welche mit der ersten Station (41) eine Tubenkörperformkavität (9) für das Spritzgiessen des Tubenkörpers (38) mit einer oberhalb des Tubenkörpers (38) angeordneten asymmetrischen Angussspinne (16) bildet, und welche Mittelstation (43) nach dem Drehen um 180° mit der zweiten Station (42) eine Deckelteilformkavität (23) für das form- und stoffschlüssige Anspritzen des Deckelteils (12) an die asymmetrische Angussspinne (15) und den Tubenkörper (38) bildet,
wobei
die Formkavitäten (9, 23) für den Tubenkörper (38) und das Deckelteil (12) im Bereich einer peripheren Verbindungszone (21) derart geformt sind, dass sich beim Spritzgiessen zwischen der ersten Komponente A und der zweiten Komponente B eine Feder-Nut-Verbindung bildet.

5. Spritzgiess-Werkzeug nach Anspruch 4, **dadurch gekennzeichnet, dass** die drehbare Mittelstation (43) in Form eines Plattenwerkzeugs aufgebaut ist und für das gleichzeitige Spritzgiessen auf gegenüberliegenden Seiten mehrere Formkavitäten (9, 23) aufweist.

6. Tubenrohling hergestellt mit einem Spritzgiess-Werkzeug gemäss Anspruch 4, welcher einen Tubenkörper (38) und eine oberhalb des Tubenkörpers angeordnete asymmetrische Angussspinne (15) aus einer ersten Materialkomponente (A) und ein mit diesen verbundenes Deckelteil (12) aus einer zweiten Materialkomponente (B) aufweist,
wobei
das Deckelteil (12) im Bereich *einer peripheren* Verbindungszone (21) *zwischen dem Tubenkörper (38) und der Angussspinne (15)* in Form einer Feder-Nut-Verbindung form- und stoffschlüssig *mit dem Tubenkörper (38)* verbunden ist.

## Claims

1. Method for producing a two-component tube blank (37) by means of a manifold injection mould having a first station (41), a second station (42) and a central station (43), wherein in a first step the first station (41) is placed against the central station (43) which is in a position of readiness and a tube body (38) with an asymmetrical sprue spider (15) arranged above the tube body (38) is injection-moulded from a first soft material component at a first temperature T₁, wherein in a second step the first station (41) is separated from the central station (43) and the central station (43) is rotated by 180° about an axis of rotation perpendicular to the orientation of the tube body (38) and in a third step the second station (42) is placed against the central station (43) and a cover part (12) is injected onto said asymmetrical sprue spider (15) and the tube body (38) from a second hard material component at a second temperature T₂, such that the two material components enter into a form-fitting and material-bonded connection in the form of a tongue-and-groove connection in a peripheral connecting zone (21), and in a fourth step the second station (42) is separated from the central station (43) and in a fifth step the tube blanks (37) are removed from the central station (43) before the central station (37) is rotated back into the position of readiness and the first step is performed again.

2. Method for producing a two-component tube blank (37) according to claim 1, **characterised in that** the first and third step are carried out simultaneously.

3. Method for producing a two-component tube blank (37) according to claim 2, **characterised in that** four or more tube blanks (37) are produced simultaneously.

4. Injection mould for a method according to claim 1, which comprises three main stations, namely a first station (41) for injection-moulding a tube body (38) with a sprue spider (15) arranged above the tube body (38) at a first temperature T₁, a second station (42) for injecting a cover part (12) at a second temperature T₂, and a central station (43) arranged rotatably between said two stations (41, 42), which with the first station (41) forms a tube body mould cavity (9) for injection moulding the tube body (38) with an asymmetrical sprue spider (15) arranged above the tube body (38), and which central station (43) after rotation by 180° forms with the second station (42) a cover part mould cavity (23) for the form-fitting and material-bonded injection of the cover part (12) onto the asymmetrical sprue spider (15) and the tube body (38),
wherein
the mould cavities (9, 23) for the tube body (38) and the cover part (12) are shaped in the area of a peripheral connecting zone (21) such that during the injection moulding a tongue-and-groove connection is formed between the first component A and the second component B.

5. Injection mould according to claim 4, **characterised in that** the rotatable central station (43) is designed in the form of a sheet die and for simultaneous injection moulding has a plurality of mould cavities (9, 23) on opposite sides.

6. Tube blank produced by an injection mould according to claim 4, which comprises a tube body (38) and an asymmetrical sprue spider (15) arranged above the tube body made from a first material component (A) and a cover part (12) connected with these made from a second material component (B),
wherein
the cover part (12) in the area of a peripheral connecting zone (21) between the tube body (38) and the spider-like sprue (15) is joined in the form of a tongue-and-groove connection in a form-fitting and material-bonded manner to the tube body (38).

## Revendications

1. Procédé de fabrication d'une ébauche de tube à deux composants (37) à l'aide d'un outil de coulée par injection multiple avec une première station (41), une deuxième station (42) et une station centrale (43), dans lequel dans une première étape, la première station (41) est appliquée contre la station centrale (43) présente dans une position de mise à disposition et un corps de tube (38) avec une grappe asymétrique (15) agencée au-dessus du corps de tube (38) est coulé par injection en un premier composant de matière tendre à une première température T₁, dans lequel dans une deuxième étape, la première station (41) est séparée de la station centrale (43) et la station centrale (43) est tournée de 180° autour d'un axe de rotation perpendiculaire à l'orientation du corps de tube (38) et dans une troisième étape, la deuxième station (42) est appliquée contre la station centrale (43) et une partie couvercle (12) est moulée par injection en un deuxième composant de matière dur à une deuxième température T₂ au niveau de cette grappe asymétrique (15) et du corps de tube (38) de sorte que les deux composants de matière entrent en liaison par complémentarité de forme et de matière dans une zone de liaison périphérique (21) en forme de liaison languette-rainure et dans une quatrième étape, la deuxième station (42) est séparée de la station centrale (43) et dans une cinquième étape, les ébauches de tube (37) sont retirées de la station centrale (43) avant que la station centrale (37) ne soit à nouveau tournée dans la position de mise à disposition et que la première étape soit à nouveau réalisée.

2. Procédé de fabrication d'une ébauche de tube à deux composants (37) selon la revendication 1, **caractérisé en ce que** la première et troisième étape ont lieu en même temps.

3. Procédé de fabrication d'une ébauche de tube à deux composants (37) selon la revendication 2, **caractérisé en ce que** quatre ébauches de tube (37) ou plus sont fabriquées en même temps.

4. Outil de coulée par injection pour un procédé selon la revendication 1, lequel comprend trois stations principales, à savoir une première station (41) pour la coulée par injection d'un corps de tube (38) avec une grappe asymétrique (15) agencée au-dessus du corps de tube (38) à une première température T₁, une deuxième station (42) pour le moulage par injection d'une partie couvercle (12) à une deuxième température T₂, ainsi qu'une station centrale (43) agencée en rotation entre ces deux stations (41, 42), laquelle forme avec la première station (41) une cavité de moule de corps de tube (9) pour la coulée par injection du corps de tube (38) avec une grappe asymétrique (15) agencée au-dessus du corps de tube (38), et laquelle station centrale (43) forme après la rotation de 180° avec la deuxième station (42) une cavité de moule de partie couvercle (23) pour le moulage par injection par complémentarité de forme et de matière de la partie couvercle (12) au niveau de la grappe asymétrique (15) et du corps de tube (38),
dans lequel
les cavités de moule (9, 23) pour le corps de tube (38) et la partie couvercle (12) sont formées dans la région d'une zone de liaison périphérique (21) de sorte qu'une liaison languette-rainure se forme lors de la coulée par injection entre le premier composant A et le deuxième composant B.

5. Outil de coulée par injection selon la revendication 4, **caractérisé en ce que** la station centrale rotative (43) est montée sous la forme d'un outil de plaque et présente plusieurs cavités de moule (9, 23) pour la coulée par injection simultanée sur des côtés opposés.

6. Ébauche de tube fabriquée avec un outil de coulée par injection selon la revendication 4, laquelle présente un corps de tube (38) et une grappe asymétrique (15) agencée au-dessus du corps de tube en un premier composant de matière (A) et une partie couvercle (12) reliée à celui-ci en un deuxième composant de matière (B),
dans laquelle
la partie couvercle (12) est reliée par complémentarité de forme et de matière avec le corps de tube (38) en forme de liaison languette-rainure dans la région d'une zone de liaison périphérique (21) entre le corps de tube (38) et la grappe asymétrique (15).
